# EUROPÄISCHE PATENTSCHRIFT

(11) **EP 2 785 599 B1**
(45) Veröffentlichungstag und Bekanntmachung des Hinweises auf die Patenterteilung: **14.10.2015**
(21) Anmeldenummer: 12801704.3
(22) Anmeldetag: 21.11.2012
(51) Int. Cl.: B65B 21/06, B65B 35/58, B65B 17/02, B65B 35/44, B65G 47/244, B65G 47/30, B65G 47/71, B65G 47/84

(54) **VORRICHTUNG UND VERFAHREN ZUR BILDUNG VON VERPACKUNGSEINHEITEN**
DEVICE AND METHOD FOR FORMING PACKAGING UNITS
DISPOSITIF ET PROCÉDÉ DE FORMATION D'UNITÉS D'EMBALLAGE

(30) Priorität: 02.12.2011 DE 102011119967
(43) Veröffentlichungstag der Anmeldung: 08.10.2014
(73) Patentinhaber: KHS GmbH, 44143 Dortmund (DE)
(72) Erfinder: NITSCH, Thomas, 47533 Kleve (Warbeyen) (DE); VAN WICKEREN, Ernst, 47652 Weeze (DE); WAGNER, Stefan, 46509 Xanten (DE)
(86) Internationale Anmeldenummer: PCT/EP2012/004812
(87) Internationale Veröffentlichungsnummer: WO 2013/079173

(56) Entgegenhaltungen:
- EP-A2- 2 258 625
- DE-A1-102009 025 824
- GB-A- 2 225 566
- US-B1- 7 198 070

## Beschreibung

Die Erfindung bezieht sich auf eine Vorrichtung zur Herstellung von Gebinden gemäß dem Oberbegriff des Patentanspruchs 1, umfassend eine ein- oder mehrbahnige Behälterzuführung oder ein- oder mehrbahnige Behälterströme, in welchen die Behälter beispielsweise bezüglich ihrer Behälter- und/oder Ausstattungsmerkmale eine willkürliche Orientierung aufweisen, und mit mindestens einer Abteil- und/oder Verdichtereinheit oder Abteil- und/oder Verdichterstrecke zum Abteilen und Verdichten einer vorbestimmten Anzahl an Behältern, verdichtete oder formierte Behältergruppen bzw. Teilgebinde gebildet und nachfolgend jeweils zu einem späteren Gebinde zusammengefasst werden, wobei Auftragselemente vorgesehen sind, so dass zumindest einer der Behälter des späteren Gebindes ein Haft- oder Klebemittel und/oder einen Haft- oder Klebemittelauftrag zumindest an einer Kontakt- oder Berührfläche aufweist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälfer quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentränsport oder in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde oder deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen und stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 B2) feste und transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden oder Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei weichem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 A1 wird an Behälter ein Klebemittel in schmalen Flächen oder Reihen angebracht, wobei jeweils benachbarte Flachen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Weiterhin ist aus der EP 2 258 625 A2 eine Vorrichtung zur Herstellung von Gebinden bekannt, bei welcher Behälter in mehrbahnigen Behälterströmen eine willkürliche Orientierung aufweisen. Die Behälter werden in einer vorbestimmten Anzahl mit einer Verdichtereinheit zu Behältergruppen geformt und nachfolgend jeweils zu dem späteren Gebinde zusammengefasst. Dabei sind Auftragselemente vorgesehen, mittels welcher den Behältern des späteren Gebindes ein Klebemittel an einer Kontakt- oder Berührfläche auftragbar ist. Dabei weist ein Transporteur einen Ausrichtabschnitt aufweist und stromabwärts zum Ausrichtabschnitt ist die Verdichtereinheit angeordnet. Die Flaschen werden dabei in einem taktenden Arbeitsstrorn durch den Ausrichtabschnitt in Form eines stationären Ausrichtkopfes in die richtige Position gedreht.

Aufgabe der Erfindung ist es, eine Vorrichtung und ein Verfahren zum Hersteilen von Gebinden der Eingangs genannten Art anzugeben, bei dem die Behälter eines Gebindes ausgerichtet innerhalb desselben aufgenommen sind.

Zur Lösung dieser Aufgabe ist eine Vorrichtung zur Herstellung von Gebinden entsprechend dem Patentanspruch 1 vorgesehen, wobei ein Transporteur vorgesehen ist, welcher einen Ausrichtabschnitt aufweist, der endlos umlaufende Einzelplatzförderelemente aufweist, welche entlang der Transportrichtung antreibbar sind und ein steuerbares Rotationselement aufweisen, wobei dem Ausrichtabschnitt die Abteil- und/oder Verdichtereinheit oder die Abteil- und/oder Verdichterstrecke nachgeschaltet ist. Mittels des Ausrichtabschnittes kann ein auf dem Einzelplatzförderelement aufstehender Behälter aus seiner ursprünglichen Lage in eine gewünschte Lage überführt, also ausgerichtet werden, wobei mittels der Abteil-und/oder Verdichtereinheit oder der Abteil- und/oder Verdichterstrecke Behälter zu dem Gebinde zusammengeführt und weitertransportiert werden, wobei das Gebinde folienlos und umreifungsfrei ist, wobei trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten, oder leicht wieder herstellbar ist.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft-oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, oder ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinarider trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heizleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation oder eine Aushärtstrecke ist in sinnvoller Weise stromab der Auftragselemente stationär oder entlang des Lineartransporteurs oberhalb und/oder gegebenenfalls auch unterhalb vorgesehen. Eine Aushärtstation kann zum Beispiel ein Tunnel mit UV-Ausleuchtung sein.

Zielführend ist, wenn der Transporteur in seinem Ausrichtabschnitt mehrere Einzelplatzförderelemente aufweist, welche die Behälter von der Eingangsseite in Richtung zur Austragsseite oder in Richtung zum einem folgenden Abschnitt des Transporteurs begleiten. Dabei sind die Einzelplatzförderelemente zielführend nebeneinander an gemeinsamen Quertraversen angeordnet, welche mit einem Antriebsmittel, z.B. in Ausgestaltung einer Kette oder in beispielhafter Ausgestaltung als Zahnriemen umlaufend angetrieben sind.

Die einzelnen Behälter werden von einem ersten Abschnitt des Transporteurs auf den Ausrichtabschnitt übergeben. An den Ausrichtabschnitt schließt sich in Transportrichtung gesehen ein dritter Abschnitt an, an welchem sich die Abteil- und /oder Verdichtereinheit oder -strecke anschließt, auf die weiter unten noch eingegangen wird. Die Behälter werden dabei zielgeführt einzeln auf das jeweilige Einzelplatzförderelement überführt. Zweckmäßig ist, wenn in einem Übergang zu dem Ausrichtabschnitt Überschubelemente vorgesehen sind, welche den Überschub vergleichmäßigen. Vorteilhaft sind die Überschubelemente dazu keilförmig ausgeführt, erweitern sich also von ihrer Spitze zu ihrer Basis in Richtung zum Ausrichtabschnitt, wobei die Spitze von dem Ausrichtabschnitt wegorientiert ist. So ergibt sich ein stets verjüngender Pfad für die Behälter in Richtung zum Ausrichtabschnitt, so dass die Behälter auch vereinzelt auf das entsprechende Einzelplatzförderelement überführt werden können.

Die Überschubelemente können in zweckmäßiger Ausgestaltung beispielhaft in der Art eines spitzen Kegels oder z.B. in der Art eines Rechtwinkligen Dreiecks ausgeführt sein, um nur einige mögliche Ausgestaltungsbeispiele zu nennen.

Das jeweilige Einzelplatzförderelement kann auch als Trägerelement bezeichnet werden, welches eine in einem Trägerkörper angeordnete, verdrehbare Aufstandsfläche, also das ansteuerbare Rotationselement aufweist. Von der verdrehbaren Aufstandsfläche erstreckt sich eine Welle weg. Die Welle kann ein Zahnrad oder eine Riemenscheibe tragen oder abschnittsweise oder gar vollständig mit einer Verzahnung versehen sein. Der Trägerkörper ist günstiger Weise mit den Quertraversen verbunden, aber in Querrichtung, also längs der Quertraversen lagefixiert. Denkbar ist aber auch, einen ansteuerbaren Motor anstelle einer Welle mit Zahnrad und/oder Verzahnung an dem Trägerelement vorzusehen, wobei der Motor ein Verdrehen bewirken könnte.

In bevorzugter Ausgestaltung kann vorgesehen sein, ansteuerbare Verstellelemente vorzusehen, welche auf die Einzelplatzförderelemente bzw. auf deren Drehmechanismus (Rotationselement; Aufstandfläche, Welle) einwirken und die Aufstandfläche um vorgegebene Beträge verdrehen können. Die Verstellelemente können gegenüberliegend zur Aufstandsfläche an einer Unterseite des Einzelplatzförderelementes bzw. des Ausrichtabschnittes angeordnet sein.

In einer ersten Ausgestaltung sind die Verstellelemente als Ketten- oder Riementrieb ausgeführt, welche ein angetriebenes Rad und ein Umlenkelement aufweisen, um welche die endlose Kette oder der endlose Riemen geführt ist. Das oder die Verstellelemente sind in dieser Ausgestaltung lagefixiert. Günstig ist, wenn jeder Reihe von Einzelplatzförderelementen auch jeweils ein Verstellelement zugeordnet ist, an welchen die Einzelplatzförderelemente so vorbeitransportiert werden, dass das Zahnrad, die Riemenscheibe oder die Welle mit dem Verzahnungsabschnitt in Eingriff mit der Kette oder dem Zahnriemen gelangt. Das angetriebene Zahnrad steht mit einem ansteuerbaren Motor in Verbindung, welcher seine Steuersignale von einer Steuereinheit oder von einer zentralen Steuereinheit der erfindungsgemäßen Vorrichtung erhält, worauf noch eingegangen wird.

In weiter möglicher Ausgestaltung kann vorgesehen sein, die Verstellelemente als Zahnstangentrieb auszuführen, wobei die Zahnstange mit dem Zahnrad bzw. dem verzahnten Abschnitt der Welle in Eingriff gebracht ist oder wird. Vorteilhaft kann vorgesehen sein, eine Zahnstange, quasi als Querstange parallel zu den Quertraversen an Längsstreben anzuordnen, wobei die Längsstreben motorgesteuert querverschiebbar an den Quertraversen gelagert sind. Ersichtlich ist dabei der Unterschied zur lagefixierten Anordnung der Verstellelemente, welche in diesem Ausgestaltungsbeispiel mit den Quertraversen in Transportrichtung mitgenommen werden, weswegen an jedem Einzelplatzförderelement auch jeweils ein Verstellelement angeordnet sein kann. Möglich ist natürlich auch, den Zahnstangentrieb lagefixiert vorzusehen, wenn die Zahnstange entlang der Transportrichtung, und nicht quer dazu orientiert ist.

Mit den Verstellelementen können die auf der jeweiligen verdrehbaren Aufstandsfläche aufstehenden Behälter des jeweiligen Einzelplatzförderelementes um einen gewünschten Winkelbetrag verdreht werden, so dass späterhin sämtliche Behälter eines Gebindes ausgerichtet, bevorzugt jeweils gleichorientiert ausgerichtet sind. Dies kann erreicht werden, indem Eingangsseitig des Transporteurs oder seines Ausrichtabschnittes oder an einer anderen geeigneten Stelle ein oder mehrere Erfassungssysteme angeordnet sind, welches Behälter- und/oder Ausstattungsmerkmale, also z.B. so genannte Embossings oder andere markante behälterspezifische Ausgestaltungen, z.B. Etiketten oder beispielsweise Verschlussdekorationen erfasst. Das Erfassungssystem kann sodann die erfassten Istdaten mit Solldaten in Beziehung setzen bzw. vergleichen und aufgrund des Unterschiedes zu den Solldaten ein entsprechendes Steuersignal an die Verstellelemente generieren, so dass der betreffende Behälter entsprechend den Solldaten ausgerichtet wird.

Dabei kann die Steuereinheit ein Steuersignal an den jeweiligen Antrieb des Verstellelementes leiten. Ist das Verstellelement mit Zahnriemen oder Kette ausgeführt, welche längs zur Transportrichtung angeordnet ist, und weist der Ausrichtabschnitt eine konstante Fördergeschwindigkeit entlang seiner Transportrichtung auf, kann der auf dem Einzelplatzförderelement aufstehende Behälter durch eine Relativgeschwindigkeit des Riemens oder der Kette zum daran sich vorbeibewegenden Einzelplatzförderelement in die Sollposition verdreht werden; Denn ist die Geschwindigkeit der umlaufenden Kette oder des Riemens gleich zur Transportgeschwindigkeit verbleibt der Behälter in seiner Position, wird also nicht verdreht. Ist die Umlaufgeschwindigkeit des Zahnriemens oder der Kette größer als die Transportgeschwindigkeit wird der Behälter zu einer Seite, z.B. nach rechts verdreht. Ist die Umlaufgeschwindigkeit des Zahnriemens oder der Kette kleiner als die Transportgeschwindigkeit wird der Behälter zu der anderen Seite, z.B. nach links verdreht. Insofern wird zum Ausrichten der Behälter von dem Erfassungssystem also ein Signal erzeugt, welches den Antriebsmotor in seiner Leistung regelt, so dass entsprechend unterschiedliche Geschwindigkeiten der Kette oder des Riemens eingestellt werden.

Weist das Verstellelement dagegen eine quer zur Transportrichtung angeordnete Zahnstange auf, welche an den Längsstreben querverschiebbar zu den Quertraversen gelagert ist, kann das generierte Steuersignal einen Motor steuern, welcher ein Querverschieben der Längsstreben und somit der Zahnstange bezogen auf die Drehachse der Welle des Einzelplatzförderelementes in beide Richtungen also nach links oder nach rechts oder ein verbleiben bewirkt. So kann der Behälter nach rechts oder links in die Sollposition verdreht werden.

Ausgangsseitig des Ausrichtabschnittes schließt sich der dritte Abschnitt an, auf welchen die ausgerichteten Behälter übergeben werden. Damit die ausgerichtete Position des Behälters beibehalten wird, ist es zielführend im Sinne Erfindung, hierzu ein mit dem Förderelement des dritten Abschnittes mitlaufendes Fixierelement vorzusehen. Das Fixierelement kann als Formstück bezeichnet werden, welches an einem Querstab angeordnet ist, und den Behälter verdrehsicher umfasst und entlang seines Transportweges verdrehsicher fixiert. Selbstverständlich können mehrere Behälter nebeneinander in Reihen angeordnet sein, so dass auch mehrere Fixierelemente, als für jeden Behälter eines, vorgesehen sind. Zusätzlich können noch Geländer vorgesehen werden, welche die Behälter einer jeden Behälterspur seitlich führen

In einer Ausgestaltungsvariante kann vorgesehen sein, die auf dem Einzelplatzförderelement aufstehenden Behälter an einer Kopfführung zu sichern, wobei die Kopfführung natürlich so ausgeführt sein sollte, dass der Ausrichtprozess durchgeführt werden kann. Denkbar ist eine mitlaufende Pack- und Zentriertulpe vorzusehen.

An den dritten Abschnitt schließt sich die Abteil- und Verdichtereinheit oder -strecke an, an welcher Auftragselemente zum Auftragen von Haft- und Klebemittel auf den jeweiligen Behälter vorgesehen sind, so dass die Behälter des späteren Gebindes nicht nur ausgerichtet zueinander sind, sondern auch ohne Verwendung von Folie oder Umreifungselemente miteinander hinreichend verbunden sind oder aneinander kleben. Möglich ist auch, bereits stromauf des Ausrichtabschnitts oder entlang desselben Auftragselemente vorzusehen. Bei einer solchen Ausgestaltung könnten benachbarte Einzelplatzförderelemente als Gruppe z.B. mittels eines Motors beispielsweise um 90° gedreht werden, und der anschließenden Verdichtereinheit oder -strecke zugeführt werden.

Wird UV-aushärtender Klebstoff aufgetragen, kann eine Aushärtestation oder -strecke an der Abteil- und/oder Verdichtereinheit oder -strecke angeordnet sein.

Das Gebinde, also dass aus den Teilgebinden zusammengeführte Gesamtgebinde kann in Transportrichtung gesehen mehrreihig, also beispielhaft zweireihig oder z.B. dreireihig ausgeführt.

Möglich ist, das Gebinde, also das Gesamtgebinde noch mit einem Trageelement, beispielsweise mit einem Griff zu versehen, wozu geeignete Vorrichtungen vorgesehen werden können, welche stromab der Austragsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, bei welchem die Behälter in dem Gebinde ausgerichtet sind, wobei trotz des Verzichts auf eine umgreifende Folie und/oder trotz des Verzichts auf eine Umreifung in einfacher Weise vermieden wird, dass die Behälter bei dem Transport insbesondere entlang der Abteil- und/oder Verdichtereinheit oder -strecke in eine nestende Position gelangen, wobei auch nach der Entnahme eines oder mehrerer Behälter aus einem Gebinde der Zusammenhalt und die Ausrichtung der verbliebenen Behälter im Gebinde erhalten bleibt. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden ausgerichtet und direkt aneinander geklebt. Vorteilhaft ist auch, dass die einzelnen Behälter nicht verdreht werden müssen, um z.B. den Klebstoff hinreichend auftragen zu können. Zudem ist ein folienloses Flaschenpack bei minimalem Klebemittelauftrag erreichbar, welcher eine hinreichende Bindung der einzelnen Behälter zueinander aufweist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes in einer Aufsicht,
- Fig. 2: den Teilabschnitt aus Figur 1 in einer Seitenansicht,
- Fig. 3: den Teilabschnitt aus Figur 1 in einer perspektivischen Ansicht,
- Fig. 4: ein Verstellelement in einer ersten Ausgestaltung in Seitenansicht,
- Fig.5: das Verstellelement aus Figur 4 in einer Aufsicht,
- Fig. 6: das Verstellelement aus Figur 4 in einer perspektivischen Ansicht,
- Fig. 7: ein Verstellelement in einer zweiten Ausgestaltung in einer Aufsicht, bei welcher die Aufstandsfläche entfernt ist,
- Fig. 8: das Verstellelement aus Figur 7 in Seitenansicht entlang eines Schnittes B-B aus Figur 9,
- Fig. 9: das Verstellelement aus Figur 7 in Aufsicht mit Aufstandsfläche, und
- Fig. 10: eine beispielhafte Abteil- und Verdichtereinheit.

In den unterschiedlichen Figuren sind gleiche Teile stets mit denselben Bezugszeichen versehen, weswegen diese in der Regel auch nur einmal beschrieben werden. Im Folgenden werden Artikel als Behälter bezeichnet.

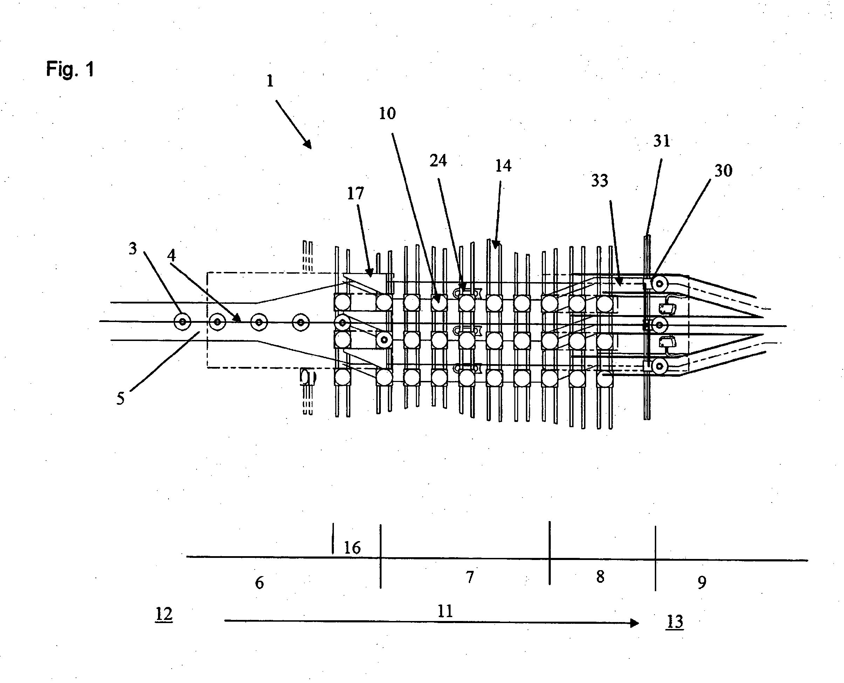

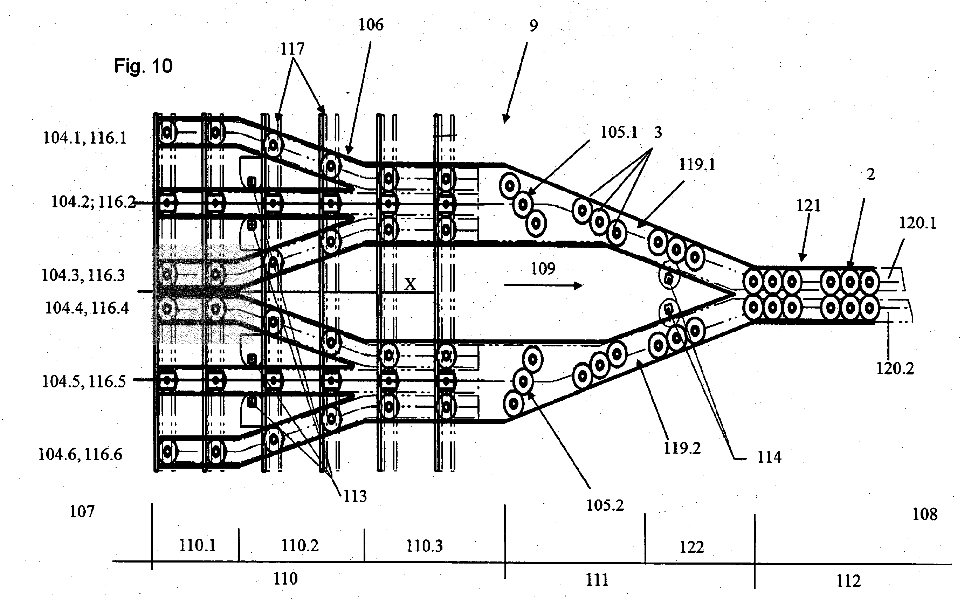

Figur 1 zeigt einen Teilabschnitt einer Vorrichtung 1 zur Herstellung von Gebinden 2 (Figur 10) aus Behältern 3, wobei im Vorfeld aus einem breitem Behälterstrom Behälter in einen einspurigen Behälterströme 4 umgewandelt wurde, in welchem die Behälter 3 beispielsweise bezüglich ihrer Behälter- und/oder Ausstattungsmerkmale eine willkürliche Orientierung aufweisen. Figur 1 zeigt einen Transporteur 5 vor, welcher drei Abschnitte 6,7,8 aufweist, wobei eingangsseitige ein erster Abschnitt 6 angeordnet ist, welcher in einen Ausrichtabschnitt 7 übergeht, an den sich ein dritter Abschnitt 8 anschließt. An den dritten Abschnitt 8 schließt sich eine Abteil- und /oder Verdichtereinheit oder -strecke 9 an, welche Auftragselemente zum beispielsweise sprühenden oder spritzenden Auftrag von Haft- und Klebemittel auf Behälter aufweist. Auf die Abteil- und /oder Verdichtereinheit oder -strecke 9 wird später noch eingegangen. Der Ausrichtabschnitt 7 weist, endlos umlaufende Einzelplatzförderelemente 10 auf, welche entlang der Transportrichtung 11 antreibbar sind und ein steuerbares Rotationselement 12 aufweisen. Mittels des Ausrichtabschnittes 7 kann ein auf dem Einzelplatzförderelement 10 aufstehender Behälter 3 aus seiner ursprünglichen Lage in eine gewünschte Lage überführt, also ausgerichtet werden, wobei mittels der Abteil- und/oder Verdichtereinheit oder der Abteil-und/oder Verdichterstrecke 9 Behälter 3 zu dem Gebinde zusammengeführt und weitertransportiert werden, wobei auf eine Folie oder ein Umreifungsband verzichtet wird.

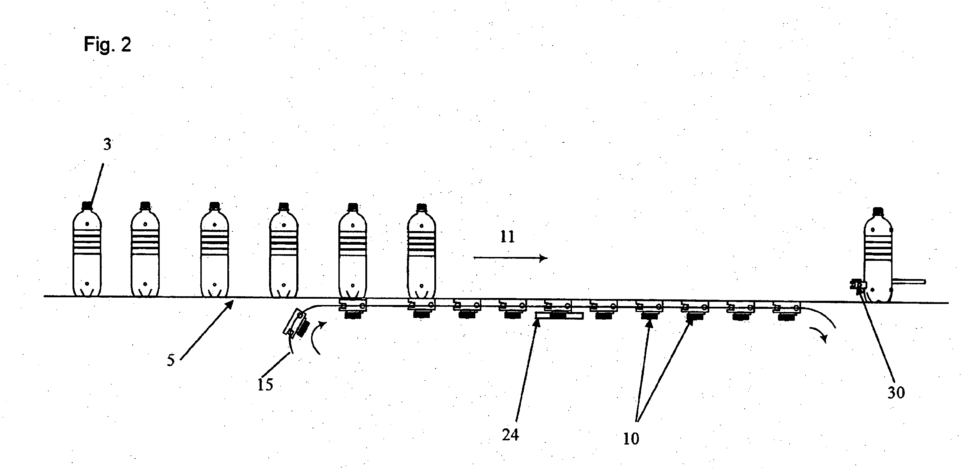

Wie Figur 1 entnommen werden kann, weist der Transporteur 5 in seinem Ausrichtabschnitt 7 mehrere Einzelplatzförderelemente 10 aufweist, welche die Behälter 3 von der Eingangsseite in Richtung zur Austragsseite 13 bzw. in Richtung zum dem dritten Abschnitt 8 des Transporteurs 5 begleiten. Dabei sind die Einzelplatzförderelemente 10 zielführend nebeneinander an gemeinsamen Quertraversen 14 angeordnet, welche mit einem Antriebsmittel 15, z.B. in Ausgestaltung einer Kette oder in beispielhafter Ausgestaltung als Zahnriemen umlaufend angetrieben sind, was der Figur 2 prinzipiell entnehmbar ist. Beispielhaft sind jeweils drei Einzelplatzförderelemente 10 an einer gemeinsamen Quertraverse 14 angeordnet, so dass die Behälter in drei Behälterspuren in Richtung zum dritten Abschnitt 8 transportiert werden.

Die einzelnen Behälter 3 werden von einem ersten Abschnitt 6 des Transporteurs 5 auf den Ausrichtabschnitt 7, d.h. auf das jeweilige Einzelplatzförderelement 10 übergeben.

In einem Übergang 16 zu dem Ausrichtabschnitt 7 sind Überschubelemente 17 vorgesehen, welche den Überschub vergleichmäßigen. Die Überschubelemente 17 sind beispielhaft keilförmig ausgeführt, erweitern sich also von ihrer Spitze 18 zu ihrer Basis 19 in Richtung zum Ausrichtabschnitt 7, wobei die Spitze 18 von dem Ausrichtabschnitt 7 wegorientiert ist. So ergibt sich ein stets verjüngender Pfad für die Behälter 3 in Richtung zum Ausrichtabschnitt 7, so dass die Behälter 3 auch vereinzelt auf das entsprechende Einzelplatzförderelement 10 überführt werden können.

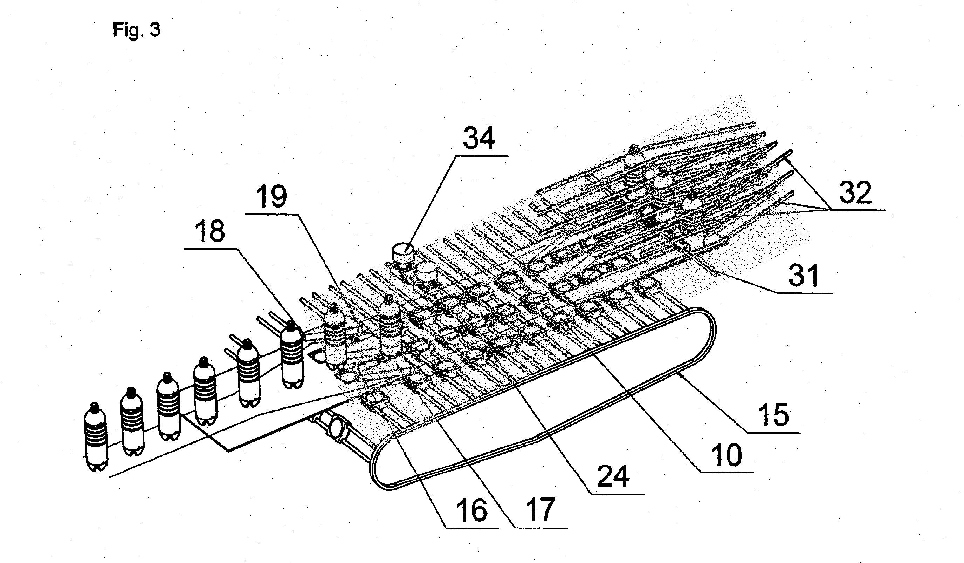

Die Überschubelemente 17 können in beispielhaft in der Art eines spitzen Kegels (Figur 3) oder z.B. in der Art eines rechtwinkligen Dreiecks (Figur 2) ausgeführt sein, um nur einige mögliche Ausgestaltungsbeispiele zu nennen.

Das jeweilige Einzelplatzförderelement 10 kann auch als Trägerelement 10 bezeichnet werden, welches eine in einem Trägerkörper 20 angeordnete, verdrehbare Aufstandsfläche 21, also das ansteuerbare Rotationselement 21 aufweist. Von der verdrehbaren Aufstandsfläche 21 erstreckt sich eine Welle 22 weg. Die Welle 22 kann ein Zahnrad 23 oder eine Riemenscheibe 23 tragen oder abschnittsweise oder gar vollständig mit einer Verzahnung versehen sein. Der Trägerkörper 20 ist mit den Quertraversen 14 verbunden, aber in Querrichtung, also längs der Quertraversen 14 lagefixiert. Denkbar ist aber auch, einen ansteuerbaren Motor anstelle einer Welle mit Zahnrad und Verzahnung an dem Trägerelement vorzusehen, wobei der Motor ein Verdrehen bewirken könnte.

Ansteuerbare Verstellelemente 24 sind vorgesehen, welche auf die Einzelplatzförderelemente 10 oder auf deren Drehmechanismus (Rotationselement 21; Aufstandfläche, Welle) einwirken und die Aufstandfläche 21 um vorgegebene Beträge verdrehen können. Die Verstellelemente 24 sind gegenüberliegend zur Aufstandsfläche 21 an einer Unterseite des Einzelplatzförderelementes 10 bzw. des Ausrichtabschnittes 7 angeordnet.

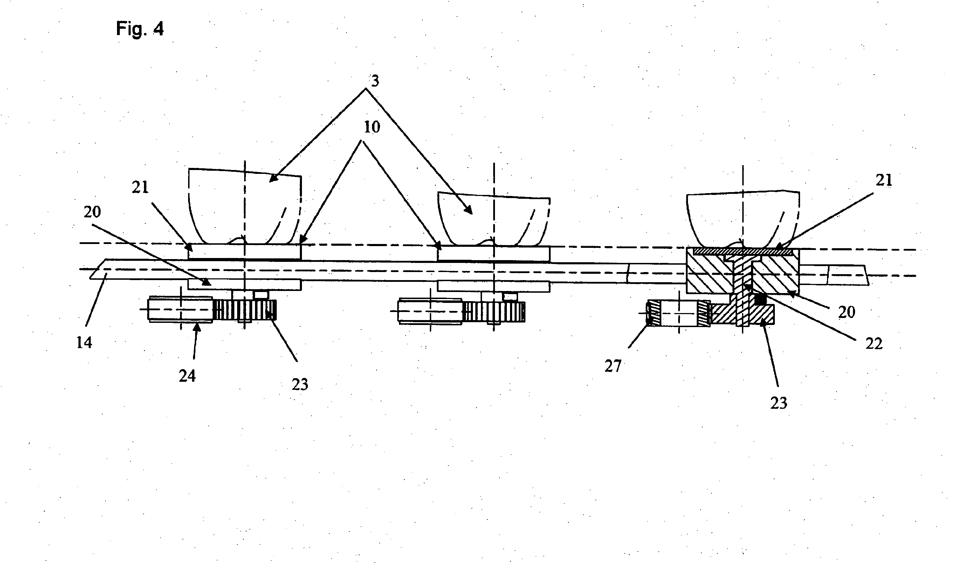

In einer in Figur 1 und in den Figuren 4 bis 6 gezeigten Ausgestaltung, sind die Verstellelemente 24 als Ketten- oder Riementrieb ausgeführt, welche ein angetriebenes Rad 25 und ein Umlenkelement 26 aufweisen, um welche die endlose Kette 27 oder der endlose Riemen 27 geführt ist. Das oder die Verstellelemente 24 sind in dieser Ausgestaltung lagefixiert. Günstig ist, wenn jeder Reihe von Einzelplatzförderelementen 10 auch jeweils ein Verstellelement 24 zugeordnet ist, an welchen die Einzelplatzförderelemente 10 so vorbeitransportiert werden, dass das Zahnrad 23, die Riemenscheibe 23 oder die Welle mit dem Verzahnungsabschnitt in Eingriff mit der Kette 27 oder dem Zahnriemen 27 gelangt. Das angetriebene Rad 25 steht mit einem ansteuerbaren Motor in Verbindung, welcher seine Steuersignale von einer Steuereinheit bzw. von einer zentralen Steuereinheit der erfindungsgemäßen Vorrichtung erhält, worauf noch eingegangen wird. das Umlenkelement kann ein drehbar gelagertes Rad sein, oder auch wie beispielhaft dargestellt als längliches Element, an welchem bevorzugt ein Riemen entlang gleitet oder geführt wird. das Umlenkelement weist eine mittige, langlochartige Ausnehmung auf.

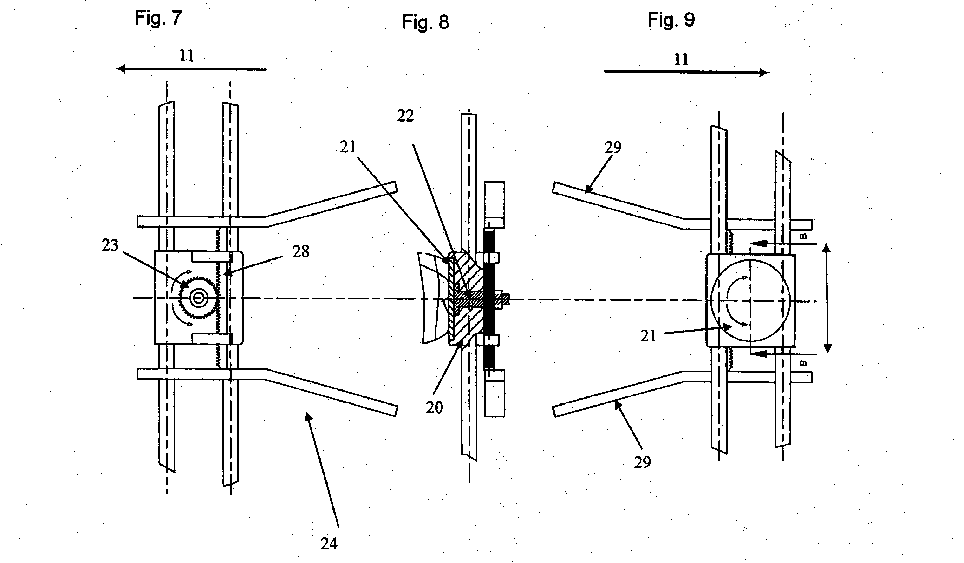

In einer in den Figuren 7 bis 9 gezeigten Ausgestaltung sind die Verstellelemente 24 als Zahnstangentrieb ausgeführt, wobei dessen Zahnstange 28 mit dem Zahnrad 23 und dem verzahnten Abschnitt der Welle 22 in Eingriff gebracht ist oder wird. Wie erkennbar, ist die Zahnstange 28 quasi als Querstange parallel zu den Quertraversen 14 an Längsstreben 29 angeordnet, wobei die Längsstreben 29 beispielsweise motorgesteuert querverschiebbar an den Quertraversen 24 gelagert sind. Mit dem verschieben der Längsstreben 29 entlang der Quertraversen 14 ist natürlich auch die Zahnstange 28 querverschiebbar. Ersichtlich ist dabei der Unterschied zur lagefixierten Anordnung der Verstellelemente 24 gemäß Figur 4, welche in diesem Ausgestaltungsbeispiel nach Figur 7 mit den Quertraversen 14 in Transportrichtung 11 mitgenommen werden, weswegen an jedem Einzelplatzförderelement 10 auch jeweils ein Verstellelement 24 gemäß dem Ausführungsbeispiel nach Figur 7 angeordnet ist. Dies ist in Figur 3 alternativ mittel den in der Zeichnungsebene oberen beiden Einzelplatzförderelementen 10 dargestellt, wobei diese Alternative in Figur 3 mit dem Bezugszeichen 34 hervorgehoben ist. Möglich ist natürlich auch, den Zahnstangentrieb lagefixiert vorzusehen, wenn die Zahnstange entlang der Transportrichtung 11, und nicht quer dazu orientiert ist. Die Längsstreben 29 weisen jeweils einen senkrecht zur Quertraverse 14 angeordneten bereich aufweisen, an welchem die Zahnstange 28 angeordnet ist. In einem rückwärtigen Bereich sind die Längsstreben 29 jeweils in Richtung zur Quertraverse 14 schräg in Richtung zur Mittelachse geführt, so dass sich in Aufsicht gesehen ein in Richtung zur Quertraverse 14 konisch verjüngender Zwischenraum zwischen beiden Längsstreben 29 ergibt.

Mit den Verstellelementen 24 können die auf der jeweiligen verdrehbaren Aufstandsfläche 21 aufstehenden Behälter 3 des jeweiligen Einzelplatzförderelementes 10 um einen gewünschten Winkelbetrag verdreht werden, so dass späterhin sämtliche Behälter 3 eines späteren Gebindes 2 ausgerichtet, bevorzugt jeweils gleichorientiert ausgerichtet sind. Dies kann erreicht werden, indem Eingangsseitig des Transporteurs 5 oder seines Ausrichtabschnittes 7 oder an einer anderen geeigneten Stelle ein oder mehrere Erfassungssysteme angeordnet sind, welches Behälter- und/oder Ausstattungsmerkmale, also z.B. so genannte Embossings oder andere markante behälterspezifische Ausgestaltungen, z.B. Etiketten oder beispielsweise Verschlussdekorationen erfasst. Das Erfassungssystem kann sodann die erfassten Istdaten mit Solldaten in Beziehung setzen und/oder vergleichen und aufgrund des Unterschiedes zu den Solldaten ein entsprechendes Steuersignal an die Verstellelemente 24 generieren, so dass der betreffende Behälter 3 entsprechend den Solldaten ausgerichtet wird.

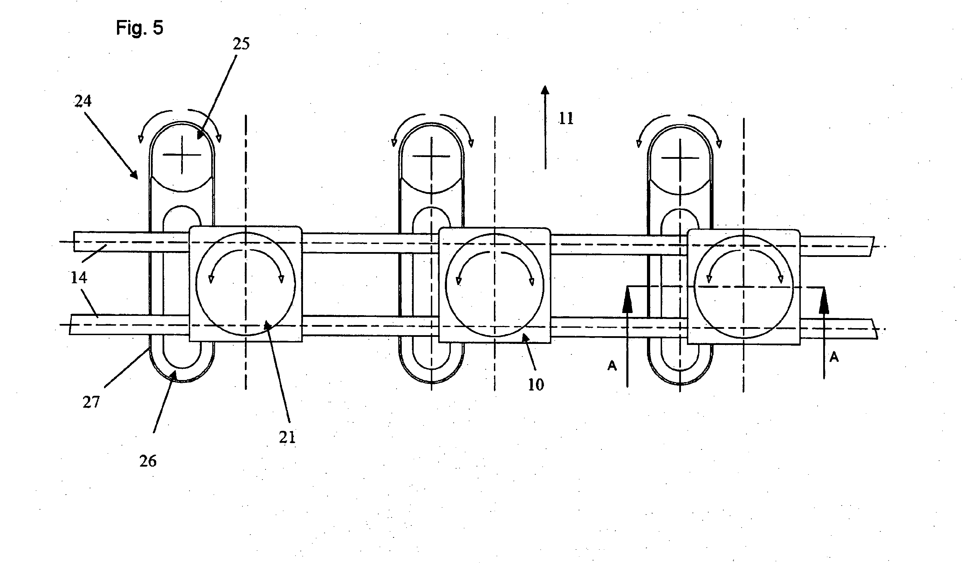

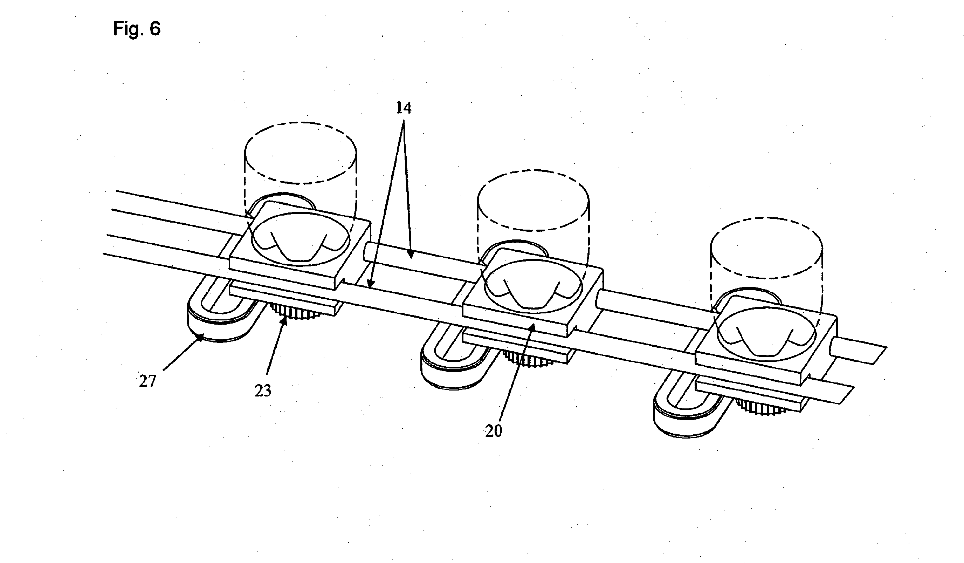

Dabei kann die Steuereinheit ein Steuersignal an den jeweiligen Antrieb des Verstellelementes 24 leiten. Ist das Verstellelement 24 mit Zahnriemen 23 oder Kette 23 ausgeführt, welche längs zur Transportrichtung 11 angeordnet ist, und weist der Ausrichtabschnitt 7 eine konstante Fördergeschwindigkeit entlang seiner Transportrichtung 11 auf, kann der auf dem Einzelplatzförderelement 10 aufstehende Behälter 3 durch eine Relativgeschwindigkeit des Riemens 23 oder der Kette 23 zum daran sich vorbeibewegenden Einzelplatzförderelement 10 in die Sollposition verdreht werden; Denn ist die Geschwindigkeit der umlaufenden Kette 23 oder des Riemens 23 gleich zur Transportgeschwindigkeit verbleibt der Behälter 3 in seiner Position, wird also nicht verdreht. Ist die Umlaufgeschwindigkeit des Zahnriemens 23 oder der Kette 23 größer als die Transportgeschwindigkeit wird der Behälter 3 zu einer Seite, z.B. in der Zeichnungsebene nach rechts verdreht. Ist die Umlaufgeschwindigkeit des Zahnriemens 23 oder der Kette 23 kleiner als die Transportgeschwindigkeit wird der Behälter 3 zu der anderen Seite, z.B. in der Zeichnungsebene nach links verdreht. Insofern wird zum Ausrichten der Behälter 3 von dem Erfassungssystem also ein Signal erzeugt, welches den Antriebsmotor in seiner Leistung regelt, so dass entsprechend unterschiedliche Geschwindigkeiten der Kette oder des Riemens eingestellt werden. Natürlich kann auch das angetriebene Rad 25 in seiner Drehrichtung gesteuert werden, wie in Figur 5 angedeutet ist. In Figur 5 ist eine Behälterreihe an gemeinsamen Quertraversen 14 gezeigt. Wie in Figur 6 angedeutet, sind die Trägerkörper 20 entlang der Quertraversen auch verschiebbar, bevorzugt jedoch lagestabil gehalten, nicht nur wenn ein Behälter 3 auf diesen aufsteht.

Weist das Verstellelement 24 dagegen die quer zur Transportrichtung angeordnete Zahnstange 28 auf, welche an den Längsstreben 29 querverschiebbar zu den Quertraversen 14 gelagert ist, kann das generierte Steuersignal einen Motor steuern, welcher ein Querverschieben der Längsstreben 29 und somit der Zahnstange 28 bezogen auf die Drehachse der Welle 22 des Einzelplatzförderelementes 10 in beide Richtungen also nach links oder nach rechts oder ein verbleiben bewirkt. So kann der Behälter 3 nach rechts oder links in die Sollposition verdreht werden, oder nicht, wenn bereits die Sollposition vorliegt.

Ausgangsseitig des Ausrichtabschnittes 7 schließt sich der dritte Abschnitt 8 an, auf welchen die ausgerichteten Behälter 3 übergeben werden. Damit die ausgerichtete Position des Behälters 3 beibehalten wird, ist jeweils ein Fixierelement 30 vorgesehen. Das Fixierelement 30 kann als Formstück bezeichnet werden, welches an einem Querstab 31 angeordnet ist, und den Behälter 3 verdrehsicher umfasst und entlang seines Transportweges verdrehsicher fixiert. Selbstverständlich können mehrere Behälter 3 nebeneinander in Reihen angeordnet sein, so dass auch mehrere Fixierelemente 30, als für jeden Behälter 30 eines, an dem Querstab 31 vorgesehen sind. Zusätzlich können noch Geländer 32 vorgesehen werden, welche die Behälter 3 einer jeden Behälterspur seitlich führen.

Die Behälter werden so ausgerichtet an die Abteil- der Verdichtereinheit oder strecke 9 übergeben, welche in Figur 1 lediglich prinzipiell und beispielhaft aus drei aufeinander zu führenden Transportbahnen 33 gebildet.

Figur 10 zeigt einen weiteren Teilabschnitt einer Vorrichtung 1 zur Herstellung von Gebinden 2 aus Behältern 3, wobei die Behälter 3 zuvor ausgerichtet wurden. Im Unterschied zu Figur 1 sind allerdings sechs Behälter4spuren vorgesehen, was bedeutet, dass wohl zwei Transporteure 5 vorgesehen werden können. Durch Abtrennen und Zusammenführen einer vorbestimmten Anzahl an Behältern 3, also beispielsweise jeweils drei Behälter 3, verdichtete oder formierte Behältergruppen 105.1 und 105.2 oder Teilgebinde 105.1 und 105.2 gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist. Die Kontakt- und Berührflächen sind in den Figuren eindeutig durch Anlage der Behälter 3 aneinander erkennbar, aber nicht mit einem Bezugszeichen versehen.

Figur 10 zeigt, dass ein Lineartransporteur 106 vorgesehen ist, welcher die Behälter 3 von einer Eingangsseite 107 in Richtung zu einer Ausgangsseite 108 transportiert. Die Transportrichtung von der Eingangsseite 107 zur Austragsseite 108 ist mittels des Pfeils 109 dargestellt und entspricht der zuvor beschriebenen Transportrichtung 11. Die Verpackungsmaschine 1 weist eine Mittelasche X, sowie drei Abschnitte 110,111 und 112 auf. Der erste Abschnitt 110 beginnt eingangsseitig, geht bin den zweiten Abschnitt 111 über, welcher an den dritten Abschnitt 112 anschließt.

In einem ersten Abschnitt 110 und in einem zweiten Abschnitt 111 des Lineartransporteurs 106 sind Auftragselemente 113, 114 zum Auftragen von Haft-oder Klebemittel vorgesehen, wobei querverschiebbare Kopfführungen 115 in dem ersten Abschnitt 110 des Lineartransporteurs vorgesehen sind, und wobei der zweite Abschnitt 111 als Dreh- und Zuführabschnitt der Teilgebinde 105.1 und 105.2 ausgeführt ist. Die Teilgebinde 105.1 und 105.2 werden in einem dritten Abschnitt zu dem Gesamtgebinde 2 zusammengeführt und in Richtung zur Austragsseite 108 transportiert.

Zielführend ist, wenn der Lineartransporteur 106 in seinem ersten Abschnitt mehrere Transportflächen 116.1 bis 116.6 aufweist, welche die Behälter 3 jeweils einspurig (104.1 bis 104.6) von der Eingangsseite 107 in Richtung zur Austragsseite 108 und in Richtung zum zweiten Abschnitt 111 des Lineartransporteurs 106 fördern. Beispielhaft sind sechs Transportflächen 116.1 bis 116.6 vorgesehen.

Der erste Abschnitt 110 des Lineartransporteurs weist drei Teilbereiche 110.1 bis 110.3 auf, von denen sich ein erster Teilbereich 110.1 von der Eingangsseite 107 in Richtung zum zweiten Teilbereich 110.2 erstreckt, welcher an den dritten Teilbereich 110.3 anschließt, der sich bis zu dem zweiten Abschnitt 111 des Lineartransporteurs 106 erstreckt.

In dem ersten Teilbereich 110.1 sind die beispielhaften sechs Transportflächen 116.1 bis 116.6 einander parallel, wie auch in Figur 1 zu erkennen. In dem zweiten Teilbereich 110.2 werden die einspurigen Behälterströme 104.1 bis 104.6, also die Transportflächen 116.1 bis 116.6 zur Bildung des jeweiligen Teilgebindes 105.1 und 105.2 zusammengeführt.

In dem dritten Teilbereich 110.3 wird das jeweilige Teilgebinde 105.1 und 105.2 in Richtung zum zweiten Abschnitt 111 transportiert.

Beispielhaft können zwei Teilgebinde 105.1 und 105.2 gebildet werden, welche jeweils drei Behälter 3 aufweisen. Wie beispielhaft erkennbar werden die zuvor beispielhaft genannten sechs einspurigen Behälterströme 104.1 bis 104.6 so zusammengeführt werden, dass jeweils beispielhaft drei einspurige Behälterströme 116. 1 bis 116.3 und 116.4 bis 116.6 das betreffende Teilgebinde 105.1 und 105.2 ergeben.

Jeweils eine mittlere 116.2 und 116.5 der jeweils drei Transportflächen 116.1 bis 116.3 und 116.4 bis 116.6 sind in dem zweiten Teilbereich 110.2 einander parallel und auch parallel zu der Mittelachse X des Lineartransporteurs. Die bezogen auf die jeweils mittlere Transportfläche116.2 und 116.5 jeweils äußeren 116.1 und 116.6 und inneren Transportflächen 116.3 und 116.4 von außen in Richtung zur Mittelachse X des Lineartransporteurs 106 bzw. von innen von der Mittelachse X des Lineartransporteurs 106 wegorientiert auf die jeweils mittlere Transportfläche 116.2 und 116.5 hin geführt werden. So werden die zwei Teilgebinde 105.1 und 105.2, welche jeweils drei Behälter 3 aufweisen, gebildet. In Aufsicht gesehen kann auch grob von einer quasi kegelartigen Ausgestaltung des zweiten Teilbereiches 110.2 mit seinen jeweils drei Behälterspuren 104.1 bis 104.3 und 104.4 bis 104.6 (Transportflächen 116.1 bis 116.3 und 116.4 bis 116.6) gesprochen werden, welcher sich quasi von dem Übergang des ersten Teilbereiches 110.1 zum dritten Teilbereich 110.3 hin verjüngt.

Die Auftragselemente 113 sind in dem zweiten Teilbereich 110.2 des ersten Abschnittes 110 des Lineartransporteurs 106 angeordnet, und versehen jeweils lediglich die Behälter 3 der mittleren Behälterspur 104.2 und 104.5 (116.2 und 116.5) mit Haft-oder Klebemittel. Es ist im Sinne der Erfindung ausreichend lediglich einen Behälter 3 des Teilgebindes 105.1 und 105.2, bevorzugt den mittleren Behälter 3 an seinen Kontakt- und Berührflächen mit dem Haft- oder Klebemittel zu versehen.

In dem dritten Teilbereich 110.3 werden die jeweils drei Behälter 3 nebeneinander, also das Teilgebinde 105.1 und 105.2 in Aufsicht gesehen quer zur Transportrichtung 109 ausgerichtet in Richtung zum zweiten Abschnitt 111 gefördert.

Im ersten Abschnitt 110, bevorzugt in dessen dritten Teilbereich 110.3 kann eine Aushärtestation oder -strecke vorgesehen sein, wenn UV-aushärtender Klebstoff aufgetragen ist.

Die Kopfführungen 115 sind, wie in Figur 10 erkennbar, an dem ersten Abschnitt des Lineartransporteurs 106 angeordnet, und können quasi entsprechend einer Pack- und Zentriertulpe, wie diese z.B. aus Etikettiermaschinen bekannt sind, ausgeführt sein.

Die Anzahl der Kopfführungen 115 in einer Querreihe entspricht der Anzahl an einspurigen Behälterströmen 104.1 bis 104.6, so dass beispielhaft sechs Kopfführungen 115 vorgesehen werden können. Die Kopfführungen 115 sind an Quertraversen 117 gelagert, wobei an jeder Quertraverse 117 die entsprechende Anzahl an Kopfführungen 115 angeordnet sind. Natürlich sind mehrere Quertraversen 117 vorgesehen. Die Quertraversen 117 sind umlaufend ausgeführt, und an einen Antriebselement, z.B. einer Kette oder an einem Riemen befestigt.

Die Kopfführungen 115 übergreifen den Behälterkopf von oben, so dass ein lagesicherer Transport der Behälter 3 in Transportrichtung 109 möglich ist. Eingangsseitig setzen sich die Kopfführungen 115 auf die Behälter 3 auf, und heben sich am Ende des ersten Abschnittes 110 von den Behältern ab.

Wie bereits gesagt sind die Kopfführungen 115 querverschiebbar. Dies ist sinnvoll, um die Behälterströme, d.h. die jeweils äußeren Behälterströme 104.1 sowie 104.6 und jeweils inneren Behälterströme 104.3 und 104.4 in dem zweiten Teilbereich 110.2 weiter lagesicher transportieren zu können, wenn die Behälter 3 entsprechend der Ausgestaltung des Transportweges im zweiten Teilbereich 110.2 nachgeführt werden. Mit anderen Worten ermöglichen die Kopfführungen 115 die lagesichere Zusammenführung der jeweils drei Behälterströme 104.1 bis 104.3 und 104.4 bis 104.6 zu dem betreffenden Teilgebinde 105.1 und 105.2, auch entlang der in Richtung zur jeweils mittleren Transportfläche 116.2 und 116.5 quasi schräg verlaufenden Transportflächen 116.1, 116.3 116.4 und 116.6.

Die Kopfführungen 115 haben aber noch die Funktion eine hinreichende Kraft auf die zusammengeführten Behälter 3 auszuüben, was einem Haft- oder Klebverbund sehr zuträglich ist. Wie in Figur 10 erkennbar, sind die Kopfführungen 115 relativ zu den Quertraversen 117 verschiebbar, wobei die Kopfführungen 115 sinnvollerweise einen entsprechenden Antrieb aufweisen. Dabei werden die jeweils äußeren und inneren Kopfführungen 115 mit daran geführten Behältern 3 aufeinander zugeführt, wobei die Teilgebinde 105.1 und 105.2 oder deren Behälter 3 entlang ihres Transportweges unter Krafteinwirkung gegeneinander gepresst werden. Der Antrieb der Kopfführungen 115 kann als Kulissenführung ausgeführt sein, wobei die Kopfführung 115 mit einem Steuerelement in die entsprechende Führung eingreift. Möglich ist auch ein motorischer Antrieb, bevorzugt ein elektromotorischer Antrieb.

In dem zweiten Abschnitt 111, welcher sich an den ersten Abschnitt 110 des Lineartransporteurs 106 anschließt werden die Teilgebinde 105.1 und 105.2 aus Ihrer Quer zur Transportrichtung 109 orientierten Ausrichtung bevorzugt um 90° so gedreht, dass die Teilgebinde 105.1 und 105.2 längs zur Transportrichtung 109 ausgerichtet sind. Dieser Ausrichteffekt kann unterstützt werden, wenn der zweite Abschnitt 111 in seiner Transportbreite der beiden Gassen der Teilgebinde 105.1 und 105.2 bevorzugt kontinuierlich verjüngt wird, so dass in einem Endbereich 122 des zweiten Abschnittes 111 die Transportbreite etwas größer bemessen ist als der Durchmesser des Behälters 3, wobei im Endbereich 118 noch dazu lediglich eine Transportbahn 119 für das jeweilige Teilgebinde 105.1 und 105.2 vorgesehen ist.

Der zweite Abschnitt 111 ist also in seinem Endbereich 118 mit jeweils nur einer Transportbahn 119.1 und 119.2 pro Teilgebinde 105.1 und 105.2 ausgeführt, welche die beiden Teilgebinde 105.1 und 105.2 in bevorzugter Ausführung schräg zur Transportrichtung aufeinander zu leiten. In dem Endbereich 118 sind weitere Auftragselemente 114 vorgesehen, welche nun die Kontakt- und Berührflächen der in dem jeweiligen Teilgebinde 105.1 und 105.2 angeordneten Behälter 3 mit Klebe-oder Haftmittel versehen. Dabei ist auch die Maßnahme vorteilhaft, dass die Transportbreite der jeweiligen Transportbahnen 119 etwas größer ist als der Durchmesser der Behälter 3, da ansonsten die mit dem Klebe- oder Haftmittel versehene "Klebeseite" an Begrenzungswänden entlang gleiten könnte, wodurch der Klebe-oder Haftmittelauftrag beeinträchtigt würde.

Die beiden Teilgebinde 105.1 und 105.2 werden ausgangs des zweiten Abschnittes 111 und eingangs des dritten Abschnittes 112 zu dem Gesamtgebinde 2 zusammengeführt, wobei die mit Klebe- oder Haftmittel versehenen Kontakt- und Berührflächen aneinander liegen. Der dritte Abschnitt 112 weist zwei Transportflächen 120.1 und 120.2, also für jedes ursprüngliche Teilgebinde 105.1 und 105.2 jeweils eine Transportfläche 120.1 und 120.2 auf. An den Transportflächen 120.1 und 120.2 sind seitlich Führungselemente 121 angeordnet. Die Führungselemente 121 sind quer zur Transportrichtung 109 und zur Mittelachse X so beabstandet, dass das Gesamtgebinde 2 bzw. die darin enthaltenden Behälter 3 aneinander gedrückt oder gepresst werden, wobei die Krafteinwirkung wiederum zweckdienlich zur Herstellung des Klebe- oder Haftverbundes ist.

Die Führungselemente 121 können auch als Geländer bezeichnet werden, welche die Gebinde 2 oder die Behälter 3 des Gebindes 2 zwischen sich führen oder stützen. Denkbar ist, die Führungselemente 121 starr auszuführen. Möglich ist aber auch, die Führungselemente 121 mitlaufend auszuführen, so dass die Behälter 3 oder die Gebinde 2 keine Relativgeschwindigkeit zu den seitlich angeordneten Führungselementen 121 aufweisen. Mit den seitlich angeordneten Führungselementen 121 kann ein seitlicher Druck erzeugt werden, welcher einer Klebverbindung der Behälter 3 des Gebindes 2 zweckdienlich ist. Mit anderen Worten haben die Führungselemente 121 nicht nur die Funktion des Führens und Stützens sondern auch noch die Funktion eine auf die Behälter 3 wirkende Kraft zu erzeugen, welche die Behälter 3 des Gebindes 2 quer zur Transportrichtung 9 gesehen verdichtet und einander annähert, gegeneinander drückt oder anpresst, um so eine hinreichende Klebverbindung bewirken zu können.

Wie in Figur 10 erkennbar, sind auch in den ersten Abschnitten 110 und 111 Führungselemente 121 vorgesehen, welche zuweilen auch als Wand bezeichnet wurden. Grundsätzlich können die Führungselemente 121 einstellbar sein, so dass Behälter 3 unterschiedlichen Durchmessers mit der Vorrichtung zu einem Gebinde 2 zusammengeführt werden können. Selbstverständlich ist auch eine kontinuierliche Anpassung zur Einstellung der lichten Breite zwischen den seitlich angeordneten Führungselementen 121 denkbar oder zielführend.

Wird UV-aushärtender Klebstoff aufgetragen, kann eine Aushärtestation oder -strecke im dritten Abschnitt 112 angeordnet sein. Um den Transport der Gesamtgebinde 2 in Richtung zur Austragsseite 108 zu unterstützen, könnten an dem dritten Abschnitt 112 Mitnehmerelemente, wie im ersten Abschnitt 110 auch, vorgesehen werden.

Das Gebinde, also dass aus den Teilgebinden zusammengeführte Gesamtgebinde kann in Transportrichtung gesehen mehrreihig, also wie dargestellt beispielhaft zweireihig oder z.B. dreireihig ausgeführt.

Möglich ist, das Gebinde 2, also das Gesamtgebinde 2 noch mit einem Trageelement, beispielsweise mit einem Griff zu versehen, wozu geeignete Vorrichtungen vorgesehen werden können, welche stromab der Austragsseite 108 oder an geeigneter Stelle an dem Lineartransporteur 106 angeordnet ist. Natürlich kann das Tragelement mit dem zuvor genannten Haft- oder Klebemittel an dem Gebinde 2 befestigt werden.

Zum Auftragen des Haft- oder Klebemittels, bevorzugt des flüssigen, also niedrigviskosen Klebemittels, mit der besonders bevorzugten Eigenschaft als UV-aushärtender Klebstoff sind die Auftragselemente 113 und 114 vorgesehen, welche als Auftragskopf oder als Spritzkopf ausgeführt sind. Wie in Figur 10 erkennbar wird nur der jeweils mittlere Behälter 3 des jeweiligen zu formenden Teilgebindes 105.1 und 105.2 mit Haft- oder Klebemittel versehen (Auftragselemente 113), wobei die Auftragselemente 113 jeweils beidseitig des mittleren Behälters 3 angeordnet sind. Die Auftragselemente 114 im zweiten Abschnitt 111 sind nahe der Zusammenführung, quasi im Enddreieck der Transportbahnen 119.1 und 119.2 angeordnet.

In dem dargestellten Ausführungsbeispiel sind die Auftragselemente 113 und 114 starr, also unbeweglich an der Vorrichtung 100 angeordnet. In weiterer Ausgestaltung ist denkbar, dass die Auftragselemente 113 und 114 gemeinsam oder vereinzelt zumindest entlang einer Teilstrecke mit dem betreffenden Gebinde 2 mitfahren, um so dann in die Ausgangsposition zurückgeführt zu werden und ein neues Gebinde 2 bzw. dessen Behälter 3 an den Kontakt- und Berührflächen mit Klebstoff zu versehen.

Die Mitnehmerelemente können in bevorzugter Ausgestaltung als Stab, bevorzugt als Rundstab also als Mitnehmerstab ausgeführt sein. Weiter können die Mitnehmerelemente selbst angetrieben sein, und/oder mit den Führungselementen 121 in Verbindung stehen. Sind die Mitnehmerelemente angetrieben, können diese mit Gleit- oder Rollmitteln an den Führungselementen 121 entlang gleiten oder rollen. Dabei könne die Mitnehmerelemente über Zugmittel (Seil, Kette, Zahnriemen oder dergleichen) miteinander verbunden sein, so dass quasi umlaufende Mitnehmerelemente gebildet sind. Dies gilt so natürlich auch für die Mitnehmer in dem ersten Abschnitt 110.

### Bezugszeichenliste

- 1: Vorrichtung zur Herstellung von Gebinden/Verpackungsmaschine
- 2: Gebinde
- 3: Behälter
- 4: Behälterspur
- 5: Transporteur
- 6: Erster Abschnitt
- 7: Ausrichtabschnitt
- 8: Dritter Abschnitt
- 9: Abteil- und/oder Verdichtereinheit oder -strecke
- 10: Einzelplatzförderelement
- 11: Transportrichtung
- 12: Eingangsseite
- 13: Austragseite
- 14: Quertraverse
- 15: Antriebsmittel
- 16: Übergang
- 17: Überschubelement
- 18: Spitze
- 19: Basis
- 20: Trägerkörper
- 21: Steuerbares Rotationselement/ drehbare Aufstandsfläche
- 22: Welle
- 23: Zahnrad/Riemenscheibe
- 24: Verstellelement
- 25: Angetriebenes Rad
- 26: Umlenkelement
- 27: Kette/Riemen
- 28: Zahnstange
- 29: Längsstrebe
- 30: Fixierelement
- 31: Querstab
- 32: Geländer
- 33: Transportbahnen/Behälterspuren

- 104: Behälterspur (104.1 bis 104.6)
- 105: Teilgebinde (5.1 und 5.2)
- 106: Lineartransporteur
- 107: Eingangsseite
- 108: Austragseite
- 109: Transportrichtung
- 110: Erster Abschnitt von 6
110.1 bis 110.3 Teilbereiche von 110
- 111: Zweiter Abschnitt von 6
- 112: Dritter Abschnitt von 6
- 113: Auftragselement
- 114: Auftragselement
- 115: Kopfführungen
- 116: Transportflächen (116.1 bis 116.6)
- 117: Quertraverse
- 118: Antriebselement für 117
- 119: Transportbahn in 11 (19.1 und 19.2)
- 120: Transportbahn in 12 (20.1 und 20.2)
- 121: Führungselemente an 112
- 122: Endbereich von 11

## Patentansprüche

1. Vorrichtung zur Herstellung von Gebinden (2), umfassend eine ein- oder mehrbahnige Behälterzuführung oder ein- oder mehrbahnige Behälterströme in welchen die Behälter beispielsweise bezüglich ihrer Behälter- und/oder Ausstattungsmerkmale eine willkürliche Orientierung aufweisen, und mit mindestens einer Abteil und/oder Verdichtereinheit (9) oder Abteil- und/oder Verdichterstrecke (9) zum Abteilen und Verdichten einer vorbestimmten Anzahl an Behältern (3), verdichtete oder formierte Behältergruppen oder Teilgebinde (105) gebildet und nachfolgend jeweils zu einem späteren Gebinde (2) zusammengefasst werden, wobei Auftragselemente (113,114) vorgesehen sind, mittels welcher zumindest an einem der Behälter (3) des späteren Gebindes (2) ein Haft- oder Klebemittel und/oder einen Haft- oder Klebemittelauftrag zumindest an einer Kontakt- oder Berührfläche auftragbar ist, und ein Transporteur (5), welcher einen Ausrichtabschnitt (7) aufweist, wobei dem Ausrichtabschnitt (7) die Abteil- und/oder Verdichtereinheit (9) oder die Abteil- und/oder Verdichterstrecke (9) nachgeschaltet ist, **dadurch gekennzeichnet, dass** der Ausrichtabschnitt (7) endlos umlaufende Einzelplatzförderelemente (10) aufweist, welche entlang der Transportrichtung (11) antreibbar sind und ein steuerbares Rotationselement (21) aufweisen, wobei in dem Ausrichtabschnitt (7) zumindest ein ansteuerbares Verstellelement (24) angeordnet ist, wobei das steuerbare Rotationselement (21) mit dem ansteuerbaren Verstellelement (24) zusammenwirkt.

2. Vorrichtung nach Anspruch 1, **dadurch gekennzeichnet, dass** die Einzelplatzförderelemente (10) in Transportrichtung (11) aufeinander folgend und quer zur Transportrichtung (11) in Reihen nebeneinander an Quertraversen (14) angeordnet sind.

3. Vorrichtung nach Anspruch 1 oder 2, **dadurch gekennzeichnet, dass** in einem Übergang (16) von einem ersten Abschnitt (6) des Transporteurs (5) auf seinen Ausrichtabschnitt (7) Überschubelemente (17) angeordnet sind.

4. Vorrichtung nach Anspruchs 3, **dadurch gekennzeichnet, dass** die Überschubelemente (17) keilförmig mit einer Spitze (18) und einer Basis (19) ausgeführt sind.

5. Vorrichtung nach einem der vorhergehenden Ansprüche, **dadurch gekennzeichnet, dass** jedes Einzelplatzförderelement (10) das ansteuerbare Rotationselement (21) in der Ausgestaltung als verdrehbare Aufstandsfläche (21) sowie eine daran angeordnete Welle (22) aufweist, wobei die Welle (22) ein Zahnrad (23), eine Riemenscheibe (23) oder einen verzahnten Abschnitt aufweist.

6. Vorrichtung nach einem der vorhergehenden Ansprüche, **dadurch gekennzeichnet, dass** das Verstellelement (24) gegenüberliegend zu einer Aufstandsfläche (21) des jeweiligen Einzelplatzförderelementes (10) an einer Unterseite des Ausrichtabschnittes (7) angeordnet ist.

7. Vorrichtung nach einem der vorhergehenden Ansprüche, **dadurch gekennzeichnet, dass** das jeweilige Verstellelemente (24) als Ketten- oder Riementrieb ausgeführt sind, welche ein angetriebenes Rad (25) und ein abgetriebenes Rad (26) aufweisen, um welche eine endlose Kette (27) oder ein endloser Riemen (27) geführt ist.

8. Vorrichtung nach einem der Ansprüche 1 bis 6, **dadurch gekennzeichnet, dass** das jeweilige Verstellelement (24) als Zahnstangentrieb ausgeführt ist, dessen Zahnstange (28) mit einem Zahnrad (23) einer Welle (22) des ansteuerbaren Rotationselementes (21) in Eingriff ist, wobei die Zahnstange (28) parallel zu Quertraversen (14) an Längsstreben (29) angeordnet sind, wobei die Längsstreben (29) querverschiebbar an den Quertraversen (14) gelagert sind.

9. Vorrichtung nach einem der vorhergehenden Ansprüche, **gekennzeichnet durch** ein oder mehrere Erfassungssysteme, welche eine Istposition der Behälter (3) mit einer Sollposition abgleichen und ein Steuersignal zum Ansteuern oder Verstellen der Verstellelemente (24) generieren, welche auf das Rotationselement (21) einwirken, so dass der betreffende Behälter (3) in die Sollposition überführbar und/oder verdrehbar ist.

10. Vorrichtung nach einem der vorhergehenden Ansprüche, **dadurch gekennzeichnet, dass** der Transporteur (5) Fixierelemente (30) aufweist, welche in einem an dem Ausrichtabschnitt (7) folgenden dritten Abschnitt (8) angeordnet sind.

## Claims

1. Device for producing bundles (2), comprising a single or multiple track container feed or single or multiple track container stream, in which the containers have an arbitrary orientation, for example, in respect of their container (3) and/or configuration features, and using at least one partitioning and/or compressing unit (9) or partitioning and/or compressing section (9) for partitioning and/or compressing a predetermined number of containers (3), compressed or formed container groups (105) are formed and subsequently each combined into a bundle (2), wherein application elements (113, 114) are provided, by means of which an adhesive agent and/or an adhesive agent application can be applied to at least one contact surface, and a transporter (5), which has an alignment section (7), **characterised in that** the alignment section comprises infinitely revolving single station conveyor elements (10), which can be driven along the transport direction (11) and a controllable rotation element (21), wherein at least one actuatable adjustment element (24) is arranged in the alignment section (7), wherein the controllable rotation element (21) interacts with the actuatable adjustment element (24), wherein the partitioning and/or compressing element (9) or the partitioning and/or compressing section (9) is downstream of the alignment section (7).

2. Device according to claim 1, **characterised in that** the single station conveyor elements (10) are arranged following one another in the transport direction (11) and transverse to the transport direction (11) in rows next to one another on transverse elements (14).

3. Device according to claim 1 or 2, **characterised in that** transfer thrust elements (17) are arranged in a transition point (16) from a first section (6) of the transporter (5) onto its alignment section (7).

4. Device according to claim 3, **characterised in that** the transfer thrust elements (17) are configured in a wedge form, with a tip (18) and a base (19).

5. Device according to any one of the preceding claims, **characterised in that** each single station conveyor element (10) comprises the actuatable rotation element (21), in this embodiment, as a rotatable standing surface (21), as well as a shaft (22) arranged at this surface, wherein the shaft (22) comprises a toothed wheel (23), a belt pulley (23), or a toothed section.

6. Device according to any one of the preceding claims, **characterised in that** the adjustment element (24) is arranged opposite a standing surface (21) of the respective single station conveyor element (10) at an underside of the alignment section (7).

7. Device according to any one of the preceding claims, **characterised in that** the respective adjustment elements (24) are configured as chain (27) or belt drives, which comprise an input driven wheel (25) and an output driven wheel (26), on which an endless chain (27) or an endless belt is guided.

8. Device according to any one of the claims 1 to 6, **characterised in that** the respective adjustment element (24) is configured as a toothed bar drive, of which the toothed bar (28) is in engagement with a toothed wheel (23) of a shaft (22) of the actuatable rotation element (21), wherein the toothed bars (28) are arranged parallel to transverse elements (14) at longitudinal braces (29), wherein the longitudinal braces (29) are mounted such as to be displaceable transversely at the transverse elements (14).

9. Device according to any one of the preceding claims, **characterised by** one or more detection systems, which compare an actual position of the containers (3) with a reference position, and generate a control signal for the actuation or adjustment of the adjustment element (24), which takes effect on the rotation element (21), such that the container (3) concerned can be transferred and/or rotated into the reference position.

10. Device according to any one of the preceding claims, **characterised in that** the transporter (5) comprises fixing elements (30), which are arranged in a third section (8) following the alignment section (7).

## Revendications

1. Dispositif de fabrication d'unités d'emballage (2) comprenant une amenée de récipient à une ou plusieurs bandes ou des courants de récipient à une ou plusieurs bandes, dans lesquels les récipients présentent une orientation arbitraire par exemple par rapport à leurs caractéristiques de récipient et/ou d'équipement, et, avec au moins une unité de compartimentation et/ou de compression (9) ou voie de compartimentation et/ou de compression (9) pour la compartimentation et la compression d'un nombre prédéterminé de récipients (3), des groupes de récipient ou unités d'emballage partielles (105) compressés ou formés sont constitués et sont réunis par la suite respectivement en une unité d'emballage (2) ultérieure, des éléments d'application (113, 114) étant prévus, à l'aide desquels, au moins sur l'un des récipients (3) de l'unité d'emballage (2) ultérieure, un agent adhésif ou collant et/ou une application d'agent adhésif ou collant peut être appliqué(e) au moins sur une surface de contact, et un transporteur (5) qui présente une section d'orientation (7), l'unité de compartimentation et/ou de compression (9) ou la voie de compartimentation et/ou de compression (9) étant montée en aval de la section d'orientation (7), **caractérisé en ce que** la section d'orientation (7) présente des éléments de transport à un emplacement tournant sans fin (10) qui sont entraînables le long du sens de transport (11) et présentent un élément de rotation (21) commandable, au moins un élément de réglage (24) commandable étant agencé dans la section d'orientation (7), l'élément de rotation (21) commandable coopérant avec l'élément de réglage commandable (24).

2. Dispositif selon la revendication 1, **caractérisé en ce que** les éléments de transport à un emplacement (10) sont agencés se suivant dans le sens de transport (11) et transversalement au sens de transport (11) en rangées les uns à côté des autres sur des traverses (14).

3. Dispositif selon la revendication 1 ou 2, **caractérisé en ce que** des éléments de chevauchement (17) sont agencés dans une transition (16) d'une première section (6) du transporteur (5) à sa section d'orientation (7).

4. Dispositif selon la revendication 3, **caractérisé en ce que** les éléments de chevauchement (17) sont réalisés en forme de coin avec une pointe (18) et une base (19).

5. Dispositif selon l'une quelconque des revendications précédentes, **caractérisé en ce que** chaque élément de transport à un seul emplacement (10) présente l'élément de rotation (21) commandable configuré comme surface d'appui (21) rotative ainsi qu'un arbre (22) agencé dessus, l'arbre (22) présentant une roue dentée (23), une poulie à courroie (23) ou une section dentée.

6. Dispositif selon l'une quelconque des revendications précédentes, **caractérisé en ce que** l'élément de réglage (24) est agencé à l'opposé d'une surface d'appui (21) de l'élément de transport à un seul emplacement (10) respectif sur un côté inférieur de la section d'orientation (7).

7. Dispositif selon l'une quelconque des revendications précédentes, **caractérisé en ce que** l'élément de réglage (24) respectif est réalisé comme un mécanisme à chaîne ou à courroie qui présentent une roue entraînée (25) et une roue arrêtée (26), autour de laquelle une chaîne sans fin (27) ou une courroie sans fin (27) est guidée.

8. Dispositif selon l'une quelconque des revendications 1 à 6, **caractérisé en ce que** l'élément de réglage (24) respectif est réalisé comme un mécanisme à crémaillère, dont la crémaillère (28) est en engagement avec une roue dentée (23) d'un arbre (22) de l'élément de rotation (21) commandable, la crémaillère (28) étant agencée parallèlement aux traverses (14) sur des barres longitudinales (29), les barres longitudinales (29) étant logées de manière mobile transversalement sur les traverses (14).

9. Dispositif selon l'une quelconque des revendications précédentes, **caractérisé par** un ou plusieurs systèmes de détection qui alignent une position réelle des récipients (3) avec une position de consigne et génèrent un signal de commande pour la commande ou le réglage des éléments de réglage (24) qui agissent sur l'élément de rotation (21) de sorte que le récipient (3) concerné puisse être transféré et/ou tourné dans la position de consigne.

10. Dispositif selon l'une quelconque des revendications précédentes, **caractérisé en ce que** le transporteur (5) présente des éléments de fixation (30) qui sont agencés dans une troisième section (8) suivant la section d'orientation (7).
